# EUROPEAN PATENT SPECIFICATION

(11) **EP 3 372 541 B1**
(45) Date of publication and mention of the grant of the patent: **03.05.2023**
(21) Application number: 17000402.2
(22) Date of filing: 11.03.2017
(51) Int. Cl.: B25J 9/02, B65G 47/90, B25J 18/02, B25J 5/00, B66F 9/06, B65G 1/04, B25J 19/02

(54) **DEVICE AND METHOD FOR GRIPPING AND MOVING ITEMS**
VORRICHTUNG UND VERFAHREN ZUM GREIFEN UND BEWEGEN VON ARTIKELN
DISPOSITIF ET PROCÉDÉ PERMETTANT DE SAISIR ET DE DÉPLACER DES ARTICLES

(43) Date of publication of application: 12.09.2018
(73) Proprietor: Magazino GmbH, 80687 München (DE)
(72) Inventor: FRANKE, Kai, 80687 München (DE); ZANGER, Lukas, 80634 München (DE); SCHWAB, Daniel, 80687 München (DE)
(74) Representative: Stellbrink & Partner Patentanwälte mbB

(56) References cited:
- EP-A1- 0 235 488
- EP-A1- 0 458 722
- EP-A1- 3 192 616
- WO-A2-2015/074755
- CN-A- 105 082 154
- US-A- 4 492 504

## Description

The invention relates to the field of robotics. More specifically, the invention relates to a robot that finds applications in material handling, such as movement of material within a factory, as well as in warehouses. Even more specifically, the invention relates to a robot configured to grip and move items from one location to another.

In a manufacturing plant, movement of materials between manufacturing processes is necessary to maintain the production. For that purpose, a load or tray with materials needs to be carried from a pickup point to a delivery point. Similarly, warehouses are commonly used to store goods and items before sending them on to the consumer (in the case of warehouses for online shops), retailer, or a third party. Warehouses are usually large buildings with many different items stored in them. Finding and retrieving items in a factory or warehouse can be a lengthy process that has been traditionally performed by human employees. This can be a tedious task for humans, and can present a bottleneck in the process of transporting or delivering items.

Recently, it has become possible to automate some parts of the item retrieval in a factory or warehouse. Various robots have been developed to manipulate shelves or items.

US 4 492 504 A discloses a robot configured to grasp and transport items; wherein the robot is configured to assume a use configuration; wherein the robot comprises a frame having a vertical frame projection in the use configuration; and a gripping unit configured to grasp an item, wherein the gripping unit has a vertical gripping unit projection in the use configuration; wherein, in the use configuration, the gripping unit is configured to assume a retracted state and an extended state, wherein the vertical gripping unit projection is greater in the extended state than in the retracted state; wherein, in the use configuration and when the gripping unit is in the retracted configuration, the vertical gripping unit projection comprises a portion not overlapping the vertical frame projection; wherein the gripping unit is configured to assume different vertical positions with respect to the frame in the use configuration; wherein the gripping unit is located at a horizontal offset from the frame; and wherein the gripping unit comprises a gripper configured to grasp an item and wherein the gripper is configured to retract and extend from the remainder of the gripping unit.

EP 0302205 A2 discloses a driverless conveying vehicle with two rack towers and a load slide arranged between these rack towers for supplying the two rack towers with unit loads. The load slide arranged in a lift frame is mounted on a slewing ring pivoting at least through +/- 90 DEG from the centre position and is arranged so as to be laterally displaceable on the slewing ring. The driving movements of the conveying vehicle, running on a passive guide track, as well as the lifting, rotary and extension movements of the load slide including the load forks are controlled by a system console via a system master computer and a radio set with data radio. The device disclosed by the above application is configured to grab items located in a production and storage area.

However, such devices often do not reach across the full height of possible storage in shelves or flow racks in the manufacturing area or in a warehouse and/or are not able to move more than one item from one point to another, leading to underutilization of factory or warehouse space. That is, the use of the storage space in a factory or warehouse is far from optimal when employing such a vehicle.

The present invention seeks to overcome or at least alleviate the shortcomings and disadvantages of the prior art. It is an object of this invention to provide a device and method for gripping and moving items that allows for a better usage of the storage space. It is further the object of this invention to provide a robot configured to grip a variety of items. It is a further the object of this invention to provide a robot configured to temporarily store items and to transport them to another location.

These objects are met by the robot and the method of the present invention.

In a first embodiment, the present invention relates to a robot configured to grasp and transport items; wherein the robot is configured to assume a use configuration; wherein the robot comprises a frame having a vertical frame projection in the use configuration; and a gripping unit configured to grasp an item, wherein the gripping unit has a vertical gripping unit projection in the use configuration; wherein, in the use configuration, the gripping unit is configured to assume a retracted state and an extended state, wherein the vertical gripping unit projection is greater in the extended state than in the retracted state; wherein, in the use configuration and when the gripping unit is in the retracted configuration, the vertical gripping unit projection comprises a portion not overlapping the vertical frame projection; wherein the gripping unit is configured to assume different vertical positions with respect to the frame in the use configuration; wherein the gripping unit is located at a horizontal offset from the frame; wherein the gripping unit comprises a gripper configured to grasp an item and wherein the gripper is configured to retract and extend from the remainder of the gripping unit; wherein the gripping unit further comprises a gripper housing configured to house the gripper, wherein the gripper housing comprises a housing top plate; and a housing chamber; wherein the housing top plate is located above the housing chamber in the use configuration; and wherein the robot is a freely moving robot.

In other words, in the discussed use configuration, the gripping unit has at least a portion having no other unit below itself. In still other words, when viewed from the top (i.e., along a vertical direction), and when the gripping unit is in its in retracted position (i.e., having the lowest vertical projection), the gripping units does not overlap the frame completely. In still other words, it has at least a portion in the retracted configuration being able to reach the ground. Put differently, the gripping unit has a footprint having at least a portion different from the footprint of the frame. Thus, the gripper unit may extend to the floor and may thus reach objects that are located on the ground. This may be particularly advantageous, as it allows the robot to also reach and pick up objects located on the ground or very close to the ground. This may aloe the robot to have a wider reach inside a shelf and may thus allow for a better and more efficient usage of the storage space in a factory or warehouse.

In one embodiment, in the use configuration and when the gripping unit is in the retracted configuration, the vertical gripping unit projection does not overlap the vertical frame projection.

The frame may be a driving frame and may comprise driving components enabling the robot to travel.

The gripping unit comprises a gripper configured to grasp an item and the gripper may be configured to retract and extend from the remainder of the gripping unit.

The gripping unit may be adapted for the gripper to extend from the remainder of the gripping unit in at least 2, preferably at least 3, further preferably at least 4 different directions with respect to the frame.

In one embodiment, this may be achieved by the gripping unit comprising different portions that are rotatable with respect to one another. However, in another embodiment, the gripper may also moves items in different linear directions, e.g., along an L-shape. That is, the gripper may move along different directions, such as along two directions. More particularly, the gripper may move along a longer side of the L-shape and change to a movement along the shorter side to slide an item laterally into a temporary storage unit.

The gripping unit is configured to assume different vertical positions with respect to the frame in the use configuration.

The robot may further comprises a drive unit comprising at least one wheel protruding below the frame; and at least one motor.

The drive unit can be used to move the robot from one location to another, facilitating the robot's task of gripping and transporting items. The wheel can comprise one of the robot's points of contact to the ground. It can be advantageous to have a plurality of wheels for a more stable configuration, or, potentially, one omni wheel that can rotate in any direction. The drive unit may comprises at least two wheels protruding below the frame; and at least two motors; the motors may preferably be located within the frame. Having two (or three) wheels can ensure a more stable robot that can move in a more precise manner. Furthermore, having at least two motors can guarantee that at least two wheels have their own motors and can move independently, allowing for the robot to better maneuver within often narrow storage environments. That is, the drive unit can comprise components located within the frame and the wheels that can protrude below it. This can ensure optimization of space on the robot.

The gripper may comprise a clamping gripper with two gripper claws. That is, the gripper can be adapted to grip objects by clasping them between two protrusions. This can be, for example, a pneumatic gripper. Such a gripper can be particularly advantageous for gripping items comprising straight sides, such as boxes, containers, books, or similar objects. The gripper can then lift objects of considerable weight, provided it can clamp them well without slipping. If the objects to be gripped have more rounded surfaces, they can be harder to grip with such a gripper.

The gripper claws may comprise a gripping range of 10 to 60 cm, more preferably 20 to 50 cm. That is, the gripper claws can extend and contract so as to firmly grasp an object with a preferable width of 20 to 50 cm.

The gripper may comprise a vacuum gripper. This type of gripper can also be referred to as a sucking gripper. The gripper can grip and move objects by creating a partial vacuum between itself and the object. This type of gripper can be particularly advantageous to grip and move uneven, rounded or slippery objects.

The gripping unit comprises a gripper housing configured to house the gripper. That is, the gripper can be housed within a supporting unit. The housing can comprise a box-like structure. The housing can comprise one or more openings. The housing can also comprise a plate on which the gripper can rest and to which it can be attached. The gripper housing can protect in case of collisions and furthermore protect any humans operating in the vicinity of the robot from injury in case of collision with the gripper. The gripper housing can also serve as a temporary item storage unit. The gripper can place the gripped items on or in the gripper housing before transporting them elsewhere.

The gripper housing may be fixed (i.e. attached) to the frame at a horizontal offset from frame. As described above, that can mean that the main frame does not support the gripper housing. Furthermore, this can mean that the gripper housing is hanging above the ground without any other robot components between it and the ground. This can be particularly advantageous, as this can allow the gripper to reach until the ground or almost until the ground, and to grip items at the ground level.

The gripper housing comprises a housing top plate; and a housing chamber; wherein the housing top plate is located above the housing chamber in the use configuration. The housing chamber can serve as a sort of shelter for the gripper when it is not gripping items. It can protect the gripper from damage due to inadvertent collisions while the robot is moving. Thus, it may render the robot more fail safe. Furthermore, it may also protect humans working in the same space as the robot from being harmed by the robot. The housing chamber may be configured to rotate on an axis substantially perpendicular to the housing top plate with respect to the housing top plate. This can be particularly advantageous, as this can allow the gripper to access a plurality of directions depending on the rotation. It can also provide increased flexibility to the robot. Furthermore, in embodiments having a temporary storage unit, it may also allow the gripper to place items into the temporary storage unit and remove items from such a temporary storage unit.

The housing chamber may comprise a housing chamber opening. That is, the housing chamber can comprise a window, opening or gap facing a certain direction, which direction may be changed by the rotational movement of the housing chamber. The gripper can exit the housing chamber using this opening.

The gripper may be configured to extend from the housing chamber through the housing chamber opening to a range of at least 5 cm, preferably at least 20 cm, more preferably at least 30 cm. This can allow the gripper to access items placed deeper on the storage shelves. This can also allow the gripper to place items for temporary storage inside the robot.

The robot may further comprise at least one guide, preferably two guides. The guide(s) may also be referred to as rail(s). The guide/rail can be located on the frame of the robot in a generally vertical orientation.

The guide may be a telescopic guide adapted to extend above the frame, preferably by a height of at least 50 cm, such as at least 80 cm, further preferably at least 100 cm. That is, the rail can be adapted to extend above the frame of the robot and to retract back to the height of the frame of the robot. The retracting can be particularly advantageous when the robot needs to pass through lower openings. The extending can be particularly advantageous when the robot needs to access items located higher on the shelves.

The guide may be telescopic by means of a pulley driven belt drive.

The gripper unit may be attached to the at least one guide.

The gripper unit may be configured to move along a guide axis between the ends of the guide. That is, the gripper unit can be configured to slide up and down along the length of the rail. This can be particularly advantageous, as it can allow the gripper to access items located at different heights.

The gripper may be configured to grip items located at a height between the lowest point of the frame and the height corresponding to the difference between the maximum height of the guide and the height of the gripper housing. That is, the gripper can be adapted to grip items located at the ground level. The gripper can also be adapted to grip items located at a height given by the height reached by the fully extended rail minus the height of the gripper housing. The gripper can also be adapted to grip items located at any intermediate height.

The gripper may be configured to grasp items located at a height between 0 and 150 cm, preferably between 0 and 200 cm, such as between 0 and 250 cm. This can be a particularly advantageous range, since many production and storage areas are optimized for humans to locate and move items. Therefore, the items in such production and storage areas can be placed at height typically not accessible for an average human, which can be about 2-2.5 meters.

In particular, the robot may be configured to grip items at the full range described above, i.e., the robot may be configured to grip items at a distance of 0 cm and 250 cm from the ground and at any intermediate distance.

The gripper may be configured to reach locations at heights below the frame. That is, when the gripper housing slides (i.e., is moved) until the lower end of the rail, the gripper can be configured to reach items located at the ground level or slightly above it, but below the end of the frame (that is, between the lower end of the frame and the end of the drive unit).

The robot may further comprise a temporary storage unit for temporary storing at least one item.

The temporary storage unit may comprise at least one shelf unit and preferably a plurality of shelf units. That is, the robot can comprise a space where items can be stored during transportation by the robot. This can be particularly advantageous, as it can allow the robot to grab several items, place them on the shelf unit and proceed to transport them to a certain location. Without the temporary storage unit, the robot might have needed to transport the items one by one in the gripper, which can increase the risk of dropping the item due to the increased vibrations and acceleration, increase the risk of injury in case of accidental collisions with humans, and decrease the efficiency of the robot.

The temporary storage unit may be located within the frame. That is, the items can be sheltered and protected by the frame during transportation by the robot.

In other embodiments, the temporary storage unit may not be located within the frame, but may be a separate unit towed by the frame.

The gripper may be configured to grip items located in the vicinity of the robot and to place said items in the temporary storage unit.

The housing chamber may be configured to rotate at least by an angle sufficient to allow the gripper to place items in the temporary storage unit. That is, in a certain first position, the housing chamber can be placed in a way that makes it possible for the gripper to grip items located in the production and storage area, for example on shelves. In a certain second position, differing from the first one by an angle of rotation, the housing chamber can be placed in a way that makes it possible for the gripper to place items inside the robot's shelf unit.

The housing chamber may be configured to rotate by at least 80°, preferably at least 170°, further preferably at least 260° and most preferably the housing chamber may be configured to rotate by 360°.

The robot may further comprise a vision system comprising at least one sensor. The vision system can be particularly useful for the robot, as it can allow it to orient itself in its surroundings, locate the area where an item should be retrieved or where it should be placed, locate the correct item on a shelf, or avoid collisions or interference with humans, other robots, or stationary objects.

The sensor may comprise at least one of a 2D laser scanner; and a 3D camera.

The sensor may be located on the gripping unit. This can be advantageous to precisely locate the item to be gripped and moved.

The sensor may comprise at least one of at least one camera; at least one ultrasonic sensor; at least one Lidar sensor, preferably at least one time of flight sensor.

There can be a plurality of sensors comprising any combination of the above sensors.

The robot may further comprise at least one processing component.

The processing component may be configured to control the drive unit using at least data from the vision system.

The processing component may be configured to control the gripping unit using at least data from the vision system.

The processing component can comprise any standard processor such as system on a chip. The processing component can be comparable to similar processing components used in smartphones or similar portable devices. The processing component can allow the robot to autonomously navigate in a production and storage area, grip items and transport them to desired locations.

The robot may comprise a width of about 50 to 150 cm, preferably 70 cm to 130 cm, such as about 100 cm. The frame may comprise a length of about 50 to 150 cm, preferably 70 cm to 130 cm, such as about 102 cm. The robot including the frame and the gripper unit may comprise a length of about 100 to 200 cm, such as about 170 cm. The frame may comprise a height of about 100 cm to about 250 cm, such as about 190 cm. The robot including the frame and the maximally extended guide may comprises a height of 200 to 400 cm, such as about 300 cm. The gripper unit may comprise a length of 30 to 120 cm, preferably 50 to 100 cm, such as about 70 cm. The gripper unit may comprise a width of 50 to 150 cm, preferably 70 cm to 130 cm, such as about 100 cm. These dimensions can be particularly advantageous for moving within a production and storage area, which typically comprises narrow walkways, shelves reachable by a typical human, and items placed at different levels on such shelves.

The robot may comprise a weight of 200 to 400 kg, such as about 250 to 350 kg without any additional items. The robot may be configured to carry at least 50 kg, more preferably at least 80 kg, such as at least 100 kg worth of items. The gripper unit may comprise a weight of about 10 to 40 kg, such as about 20 to 30 kg, more preferably around 22 kg. The gripper may be configured to grip and transport items comprising a weight of at least 10 kg, such as at least 15 kg, more preferably at least 18 kg. This can ensure that the robot can grip and move relatively heavy items which can be often found in a factory and warehouse.

The drive unit may be configured to move with a maximum speed of about 1 to 3 m/s, such as about 1.5 m/s. That is, the robot may be adapted not to move at a speed exceeding these maximum speeds. Such a speed can ensure the safety of humans operating in the same production and storage area. It can further be advantageous in case of the robot inadvertently colliding with other robots or stationary objects in the factory and warehouse, as damage can then be minimized.

The robot may be configured to grasp a cube with an edge length of 20 cm, preferably 30 cm, further preferably 40 cm.

The robot is a freely moving robot.

In other words, the robot may be configured to move freely in space. This may be different from, e.g., the vehicle disclosed in EP 0302205 A2 above, which vehicle follows a metal wire in the floor. Thus, the present robot may be configured to move freely in space, leading to more versatility.

The present invention also relates to a method for gripping and moving items, said method comprising providing a robot as discussed above; the robot approaching a first location comprising an item; the robot gripping the item using the gripping unit; and the robot moving the item.

In some embodiments, the gripper moves the item into the gripper housing. That is, the gripper can move the gripped item and release it inside the gripper housing. It can be advantageous to temporarily store the item inside the gripper housing before moving it into the shelf unit of the robot (if it is present), or placing it elsewhere. This can ensure that the item does not fall during transportation. It can also allow the housing chamber to rotate before the gripper can place the item inside the shelf unit.

In some embodiments, the gripper moves the item into the temporary storage unit. As discussed above, this can be done, for example, by rotating the housing chamber to allow the gripper access to the shelf unit.

The method may further comprise the robot approaching a second location different from the first location; the gripping unit gripping the item in the temporary storage unit; the gripping unit moving the item from the temporary storage unit to the second location. The method may further comprising the steps of: the gripper extending from the housing chamber; the gripper moving the item into the housing chamber; the housing chamber rotating by a certain angle on an axis perpendicular to the housing top plate; the gripper extending from the housing chamber and placing the item in the temporary storage unit; and the gripper returning to the housing chamber. That is, it can be particularly advantageous to have the housing chamber rotate, as it can provide more flexibility to the robot. The chamber can also serve as an intermediate storing location for an item, between the location from which the gripper grabs it, and the shelf unit of the robot.

The method may further comprising the step of the gripping unit housing moving to the height of the item before the step of gripping the item. That is, the gripper housing can slide up or down on the rail to achieve the height of the item to be grabbed.

In the step of the robot gripping the item, the robot may grip the item from a location distanced from the ground by no more than 5 cm, preferably no more than 3 cm, further preferably no more than 1 cm.

In some embodiments, the robot grips the item from the ground. That is, the robot can advantageously grip items located very close to the ground or on the ground, which can be very useful in a storage environment, as it allows maximal use of space, while making sure that it will still be accessible by the robot.

The invention will now be described with reference to the accompanying drawings, which depict embodiments of the present invention. More particularly
- Fig. 1: depicts a robot 1 according to one embodiment of the invention;
- Fig. 2a: depicts another view of a robot 1 according to one embodiment of the invention;
- Fig. 2b: depicts a further view of a robot 1 according to one embodiment of the invention;
- Fig. 3a: depicts another view of a robot 1 according to one embodiment of the invention;
- Fig. 3b: depicts a semi-transparent view of the robot 1 according to one embodiment of the invention;
- Fig. 4: depicts a schematic gripper 50 according to one embodiment of the invention;
- Fig. 5: depicts a drive unit 30 according to one embodiment of the invention;
- Fig. 6: depicts a gripper housing 60 according to one embodiment of the invention;
- Fig. 7: depicts a robot 1 in a storage environment;
- Fig. 8: depicts another view of a robot 1 in a storage environment.

In the following, exemplary embodiments of the invention will be described, referring to the figures. These examples are provided to provide further understanding of the invention, without limiting its scope.

In the following description, a series of features and/or steps are described. The skilled person will appreciate that unless required by the context, the order of features and steps is not critical for the resulting configuration and its effect. Further, it will be apparent to the skilled person that irrespective of the order of features and steps, the mentioning of time delays or further steps between the described steps, such delays or further steps can be present between some or all of the described steps.

Throughout the description of the drawings, like features are denoted by like reference numerals. However, for ease of illustration and brevity of the description, some reference numerals may be omitted in some of the Figures.

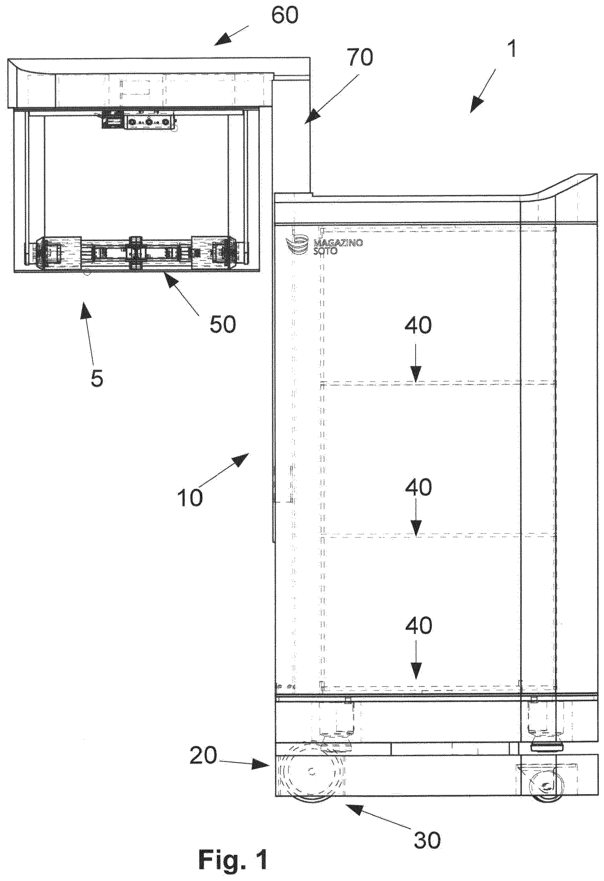

Figure 1 depicts a schematic embodiment of a robot 1. The robot 1 comprises a frame 10. The frame 10 can provide the structure of the robot and envelop the inner electronics of the robot, as well as a temporary storage unit for temporary storing items. The temporary storage unit may comprise one or more shelf units 40 for storing the items. The shelf units 40 can comprise shelves where items to be transported by the robot 1 can be stored. It will be understood that throughout the drawings, the robot 1 is depicted in a use configuration, i.e., a configuration where the robot 1 may be used to pick up and transport items. Simply put, the depicted use configuration is a configuration where the robot 1 assumes an "upright" position, where wheels of drive unit 30 are located on the ground. When reference to terms like "horizontal" or "vertical" is made in the present specification, such terms should usually (unless something else is mentioned or clear to the skilled person) be understood to be in such a use configuration of the robot 1.

A lower end of the frame 10 may be referred to as a frame base 20. That is, the base 20 can comprise the part of the frame 10 closest to the ground when the robot 1 is in a standard position. The frame 10 may form the support structure of the robot 1, i.e., support at least a substantial portion of the robot.

The robot 1 can further comprise a drive unit 30. The drive unit 30 can be partially located within the frame 10. The drive unit 30 protrudes below the base 20 of the frame 10. That is, the drive unit 30 comprises points of contact between the robot 1 and the ground (again, when the robot is in its intended use position).

The robot 1 further comprises a gripping unit 5. The gripping unit 5 is located at a horizontal offset from the frame 10, i.e., it may have at least a portion having a vertical projection not overlapping the vertical projection of the frame 10. In some embodiments, the complete vertical projection of the gripping unit 5 does (at least in one configuration) not overlap the vertical projection of the frame 10. The gripping unit 5 is configured to assume a plurality of positions, including a retracted and at least one extended position or configuration. The gripping unit 5 comprises a gripper 50 extendable from the remainder of the gripping unit 5. In an extended configuration of the gripping unit 5, the gripper 50 may grip (i.e. grasp) an object positioned externally of the robot 1. By moving back to the retracted configuration, the gripper 50 may then move the grasped object into the robot 1. Further, the gripper 50 can grip items in the vicinity of the robot 1 and place them onto shelf units 40. The gripper 50 can also grip items on the shelf units 40 and place them in the vicinity of the robot 1. The gripper 50 can extend to a certain maximum length. The gripper 50 can also be configured to rotate.

The gripping unit 5 also comprises a gripper housing 60. The gripper housing 60 can envelop the gripper 50. The gripper housing 60 can be placed adjacent to the robot frame 10 at a horizontal offset (i.e., having a non-overlapping vertical projection). The gripper housing 60 can be placed at a horizontal offset from the frame 10 and the frame base 20. That is, the gripper housing 60 can be located next to the frame 10 of the robot 1. Put differently, the gripper housing 50 and thus the gripper unit 5, have a horizontal extension different from the horizontal extension of the robot frame 10 and the robot base 20 in the use configuration. Put differently still, the gripper unit 5 does not comprise any portion below itself. This may be different from prior art robots and it may allow the gripper unit 5 to extend to the lowermost point and/or to the ground. This may allow the robot 1 to reach objects (i.e., items) that are located very close to the ground. Thus, the reach of the robot 1 may be increased vis-à-vis other robots, thereby allowing a better usage of the storage space in a factory and warehouse.

The gripper housing 60 can futher comprise an opening (not shown in Figure 1) via which the gripper 50 can extend from the gripper housing 60.

The gripper housing 60 can be fixed on a rail 70 (which may also be referred to as a guide). The rail 70 can be located within the frame 10 of the robot 1. The gripper housing 60 can be configured to move along the rail 70 in a substantially vertical direction (provided the robot is in its standard operating position). That is, the gripper housing 60 can move up and down along the frame of the robot 1. The rail 70 can also be a telescopic rail. That is, the rail 70 can be configured to extend beyond the frame 10 of the robot 1 in the substantially vertical direction. Put differently, the rail 70 may assume a vertically retracted and at least one vertically extended configuration. This may allow the robot 1 to both reach objects that are located relatively high and to travel to places with a limited height. The rail 70 can also be configured to retract so that it does not exceed the height of the frame 10. The gripper housing 60 can be fixed to the rail 70 in such a way, that when the gripper housing 60 is at the lower end of the rail 70, the gripper 50 can reach items placed at the ground level. That is, the gripper 50 can reach items placed lower than the frame base 20 of the robot 1.

The robot 1 can further comprise sensors (not shown here) and electronics that are configured to navigate, such that the robot 1 can travel freely. That is, the robot 1 may be a freely travelling robot 1. The robot 1 can be remotely controlled, be partially autonomous, and/or be an autonomous robot 1. The robot 1 can comprise a computer vision system (such as a plurality of sensors and corresponding processing means) that can interpret or at least partially interpret and map the surroundings of the robot 1.

The robot 1 can comprise a width of 0.5 to 1.5 m, such as about 1 m. The width of the rail 70 can comprise 0.7 to 1.2 m, such as about 0.95 m. The robot 1 can comprise a length of about 0.5 to 1.5 m, such as about 1.02 m. The length of the robot including the gripper in the maximally extended position can comprise 1 to 2.5 m, such as about 1.7 m. The height of the robot can be about 1 to 3 m, such as about 1.9 m. The height of the robot including the telescopic rail in the maximally extended position can be about 2 to 4 m, such as about 3 m. The vertical reach of the gripper 50 (with respect to the lowest points of the drive unit 20) can comprise about 1 to 3 m, such as about 0.5 to 3.5 m, preferably 0 to 4 m. The horizontal reach of the gripper 50 can comprise 10 mm, more preferably 20 mm, such as about 25 mm measured from the gripper housing 60. The gripper can be configured to rotate by 120 degrees, more preferably 240 degrees, such as 360 degrees. The weight of the robot without any extra items loaded onto it can comprise about 100 to 500 kg, such as about 200 to 400 kg, more preferably 250 to 350 kg. The weight of the gripper housing 60 including the gripper 50 can comprise about 10 to 50 kg, such as about 15 to 40 kg, more preferably 20 to 25 kg, such as about 22 kg. The maximum height of the gripper housing including the gripped items can comprise about 30 to 50 kg, such as about 40 kg. The maximum dimensions of the items that the robot 1 can be adapted to grip can comprise a length of about 0.4 m, preferably 0.5 m, such as about 0.6 m. The maximum with can comprise 0.2 m, preferably 0.3 m, such as about 0.4 m. The maximum height can comprise 0.2 m, preferably 0.3 m, such as about 0.4 m.

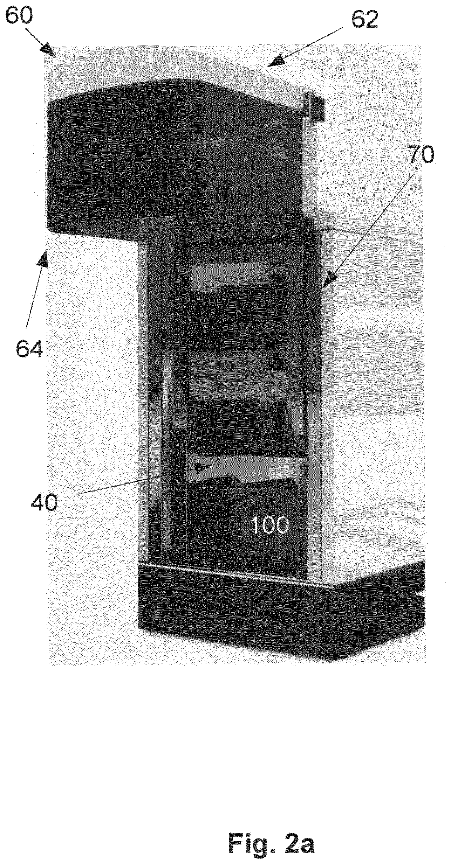

Figure 2a depicts another view of the robot 1 according to one aspect of the invention. The gripper housing 60 comprises two parts: housing top plate 62 and housing chamber 64. The housing top plate is positioned above the housing chamber 64 in a use configuration. The housing top plate 62 can be attached to the rail 70. The housing chamber 64 can house the gripper 50 and optionally other elements such as sensors. The housing chamber 64 can be adapted to rotate with respect to the housing top plate 62. The housing chamber 64 comprises a housing chamber opening 642 through which the gripper 50 can extend and grip items 100. In the embodiment depicted here, shelf units 40 comprise items 100, depicted here as boxes or crates 100.

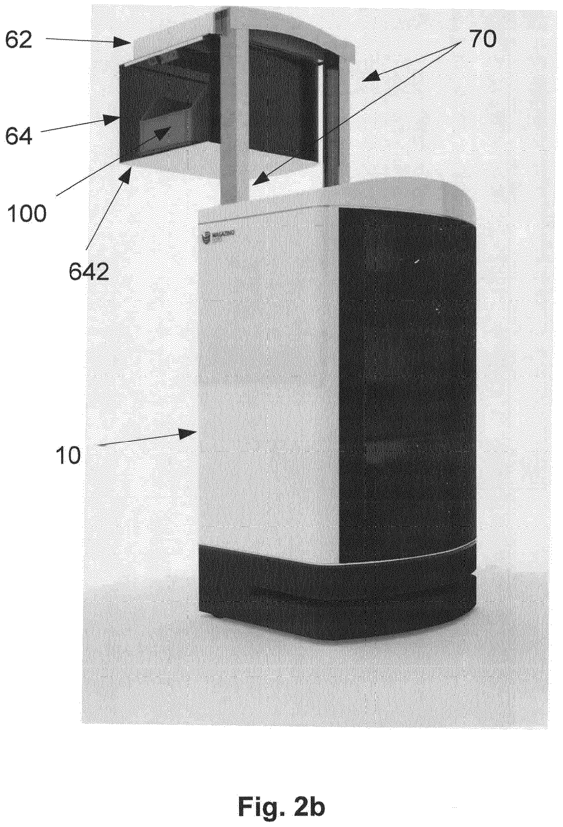

Figure 2b depicts a back view of the robot 1. The rail 70 is shown in the extended position above the frame 10. The housing chamber 64 comprises an item 100 that the gripper 50 (not shown here) has gripped. This item 100 can be placed on one of the shelf units 40 to be transported via the robot 1. The housing chamber 64 can rotate with respect to the housing top plate 62, so that the gripper can place the item 100 from the housing chamber 64 to a shelf unit 40 via the housing chamber opening 642.

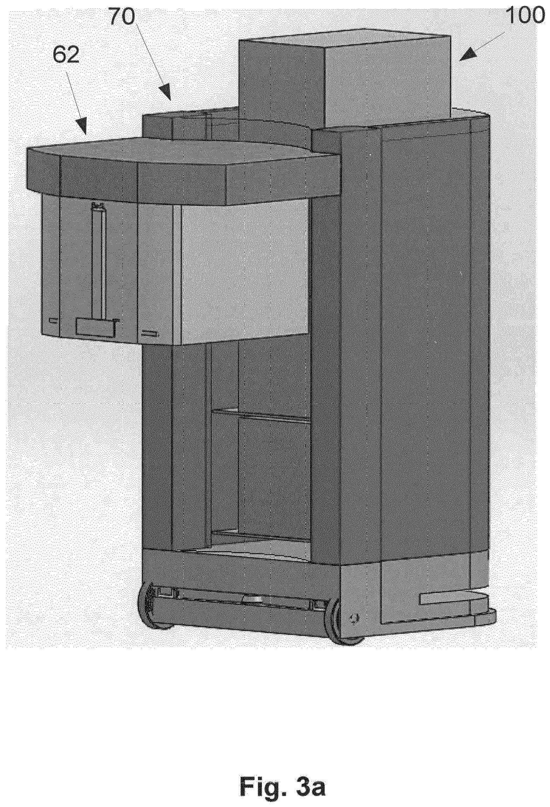

Figure 3a depicts another embodiment of the robot 1. The rail 70 is shown in the retracted position. The housing top plate 62 is attached to the rail 70 and configured to move along its length. The item 100 is shown as placed on the shelf unit 40 (not shown here).

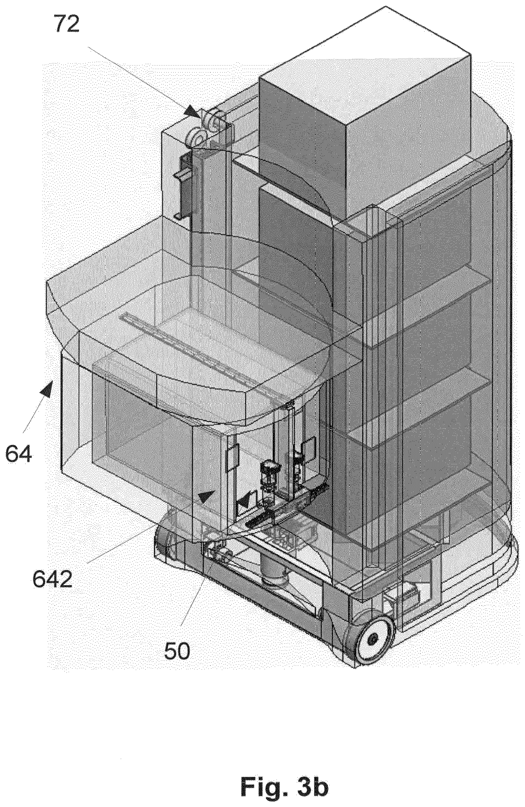

Figure 3b depicts a partially transparent view of the robot 1. The gripper 50 is visible inside the housing chamber 64. The housing chamber opening 642 is also shown in this Figure. Rail mechanism 72 is visible through the rail 70 (not shown here). The rail mechanism 72 can comprise a system comprising gears, pulleys and other various components.

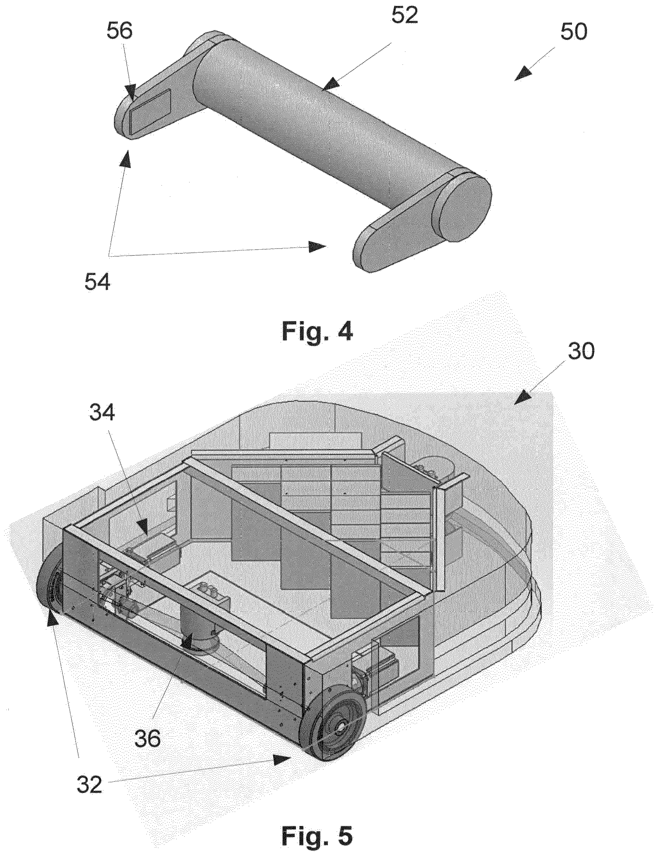

Figure 4 shows a schematic embodiment of the gripper 50. The gripper 50 can comprise a gripper bar 52. The gripper 50 can also comprise gripper claws 54. The gripper claws 52 can be configured to extend and contract on the gripper bar 52 between a certain minimum range and a certain maximum range, so as to be able to grab items. The range of the claws can comprise 10 to 80 cm, preferably 20 to 60 cm, such as 20 to 50 cm. The gripper 50 can also comprise a gripper sensor 56. The gripper sensor 56 can be a proximity sensor, a pressure sensor or a similar sensor. Note, that the depicted embodiment of the gripper 50 is not the only possible embodiment. The gripper 50 can also comprise a vacuum gripper that is configured to grip items by creating a partial vacuum between the item and the gripper 50 (not depicted).

Figure 5 depicts an embodiment of the drive unit 30. The drive unit 30 can comprise wheels 32. There can be at least one wheel 32. The depicted embodiment comprises two visible wheels 32. Preferably, the robot 1 can comprise at least three wheels 32. The drive unit 30 further comprise at least one motor 34. In the depicted embodiment, two motors 34 are shown, each controlling one of the shown wheels 32. Also depicted is a safety laser scanner 36.

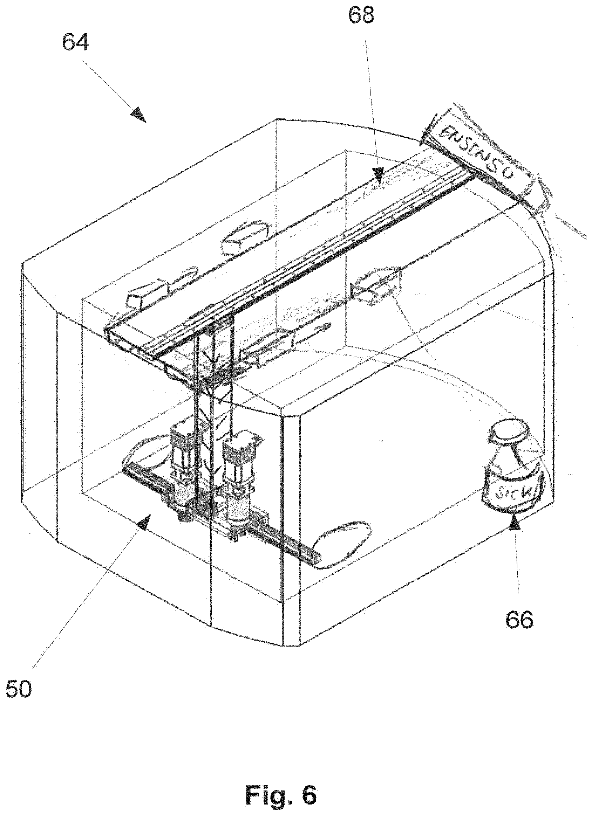

Figure 6 depicts a partially transparent schematic view of the housing chamber 64. The gripper 50 is visible in the housing chamber 64. The gripper 50 can be adapted to move on gripper rail 68 within the housing chamber 64. This can be used when the gripper grips an item and returns back to the housing chamber 64: the item can then be placed inside the housing chamber 64 by the gripper retreating via the gripper rail 68. The housing chamber 64 can further comprise a housing sensor 66. The housing sensor 66 can also be referred to simply as a sensor 66. The sensor 66 need not be placed in the housing chamber 64, and it being depicted is just exemplary. The housing sensor 66 can comprise at least one of a 2D laser scanner, a 3D laser scanner, at least one camera, at least one ultrasonic sensor, at least one time of flight camera and at least one Lidar.

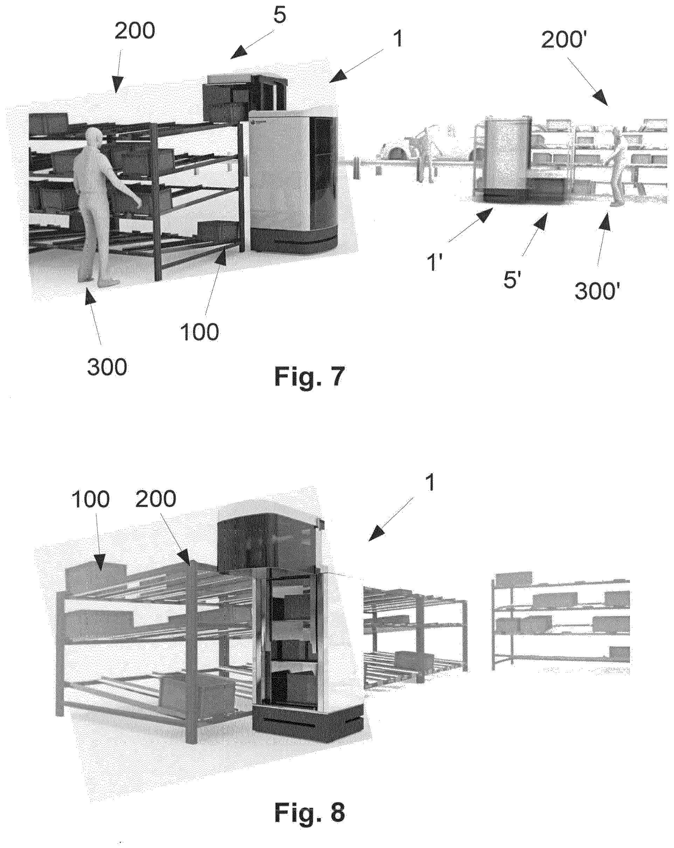

Figure 7 depicts an embodiment of the robot 1 in a storage environment such as the production or storage area. The gripping unit 5 is placed close to the top of a shelf 200 comprising items 100. A human 300 can also operate within the storage environment simultaneously with the robot 1. The robot 1 can comprise sensors that are adapted to detect humans and to avoid colliding with them or otherwise harming them. On the right of Figure 7, another robot 1' is shown. Its gripping unit 5' is placed towards the bottom of a shelf 200', preferably by sliding down on the rail 70 (not shown). Another human 300' is shown working side by side with the robot 1'.

Figure 8 depicts another embodiment of the robot 1 in a storage environment. Multiple items 100 are loaded into the robot, and it can unload them onto the shelf 200 or load further items 100 into its shelf unit 40 (not shown here).

A typical use scenario of the robot 1 of the present invention will now be described. One of the tasks to be performed by the robot 1 is to grab and transport items 100 (see, e.g., Fig. 8) in a factory or warehouse. The robot 1 may receive picking orders to pick up one or a plurality of items 100 (which may also be referred to as objects). To this end, the robot 1 may also comprises a communication module, adapted to communicate wirelessly with another device. After having received the picking order, the robot may move to an object 100 to be picked up. As an example, the robot 1 may have the one or more guides or rails 70 (see, e.g., Fig. 1) in a fully retracted configuration while travelling to the object 100 to be picked up. It will be understood that this may correspond to the robot 1 having the configuration of the lowest height. This may allow the robot 1 to travel routes with limited height.

The robot 1 may thus reach the location of the object 100 to be picked up. The object 100 may typically be placed in a shelf 200 of a factory or warehouse (see, e.g., Fig. 8). Here, the object 100 may be placed at different height levels. The gripper 50 is brought to the appropriate height level to pick up the object 100. To achieve that, the gripper 50 may move along the rail(s) 70. It will be understood that by moving to the most downward position of the rail(s) 70, the gripper may reach locations close to the ground level and, in fact, the ground level. This may be due to the fact that there is no supporting structure below the gripper 50 and the gripper unit 5, that is based on the ground level. Thus, the gripper 50 may reach the ground and the robot 1 may be adapted to pick up objects 100 very close to the ground level and also objects positioned on the ground level.

If an object 100 is positioned further upwards, the gripping unit 5 may move along the rails 70 to position the gripper 50 at the correct height. Furthermore, there may also be a situation where an object 100 to be picked up is located at a height greater than the frame 10. In such a situation, the telescopic rail(s) 70 may assume an extended configuration that allows the gripper 50 to grip and pick up an object at such a position.

Once the gripper 50 is located at the correct height to pick up the object 100, the gripper 50 may be extended in a horizontal direction and pick up the respective object 100. Once the object 100 is secured by the gripper 50, the gripper may be horizontally retracted again, i.e., it may be moved back inside the housing chamber 64.

In case only one object 100 is to be transported to a particular location, the robot 1 may transport the object 100 to this location, while the object 100 is placed in the gripping unit 5 (e.g., held by the gripper 50). Typically, this is done while the rail(s) 70 is/are in the retracted configuration.

However, in another use scenario, more than one object 100 is to be brought to a destiny location. In such a case, the robot 1 may not leave the first object 100 that has been picked in the gripping unit 5, but may move it to a temporary storage unit. To do this, the housing chamber 64 may be rotated with regard to the top plate 62 while the gripper 50 is in the horizontally retracted configuration. In particular, it may be rotated such that the gripper 50 may extend toward a robot shelf unit 40 of the temporary storage unit. The gripper 50 may also be brought to the correct height (with regard to the shelf unit 40 where the object 100 is to be put to), the gripper 50 may then be horizontally extended and release the object 100 at the robot shelf unit 40. Thus, the object 100 may be intermediately stored in the shelf unit 40 and the gripper 50 is free to allow the robot 1 to pick up one or more additional objects 100.

The above described process may be repeated to store additional objects 100 in the robot 1 to thereby increase the efficiency of the robot 1.

The robot 1 may then move to the destiny location and release the objects 100 by a process substantially reverse to the process described above.

Thus, the robot 1 may be used to grab and transport one or more objects 100 to a desired location and release the object(s) 100 at this location.

As used herein, including in the claims, singular forms of terms are to be construed as also including the plural form, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to", and are not intended to exclude other components.

The term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously, unless the context clearly indicates otherwise.

All of the features and/or steps disclosed in the specification can be combined in any combination, except for combinations where at least some of the features and/or steps are mutually exclusive. In particular, preferred features of the invention are applicable to all aspects of the invention and may be used in any combination.

Whenever a relative term, such as "about", "substantially" or "approximately" is used in this specification, such a term should also be construed to also include the exact term. That is, e.g., "substantially vertical" should be construed to also include "(exactly) vertical".

## Claims

1. A robot (1) configured to grasp and transport items; wherein the robot (1) is configured to assume a use configuration; wherein the robot (1) comprises
a frame (10) having a vertical frame projection in the use configuration; and
a gripping unit (5) configured to grasp an item, wherein the gripping unit (5) has a vertical gripping unit projection in the use configuration;
wherein, in the use configuration, the gripping unit (5) is configured to assume a retracted state and an extended state, wherein the vertical gripping unit projection is greater in the extended state than in the retracted state;
wherein, in the use configuration and when the gripping unit (5) is in the retracted configuration, the vertical gripping unit projection comprises a portion not overlapping the vertical frame projection;
wherein the gripping unit (5) is configured to assume different vertical positions with respect to the frame (10) in the use configuration;
wherein the gripping unit (5) is located at a horizontal offset from the frame (10);
wherein the gripping unit (5) comprises a gripper (50) configured to grasp an item and wherein the gripper (50) is configured to retract and extend from the remainder of the gripping unit (5);
wherein the gripping unit (5) further comprises a gripper housing (60) configured to house the gripper (50), wherein the gripper housing (60) comprises
a housing top plate (62); and
a housing chamber (64);
wherein the housing top plate (62) is located above the housing chamber (64) in the use configuration; and
wherein the robot is a freely moving robot.

2. The robot (1) according to claim 1 wherein the robot (1) further comprises a drive unit (30) comprising
at least one wheel (32) protruding below the frame (10); and
at least one motor (34).

3. The robot (1) according to the claim 1, wherein the housing chamber (64) is configured to rotate on an axis substantially perpendicular to the housing top plate (62) with respect to the housing top plate (62).

4. The robot (1) according to the preceding claim wherein the housing chamber (64) comprises a housing chamber opening (642), and wherein the gripper (50) is configured to extend from the housing chamber (64) through the housing chamber opening (642) to a range of at least 5 cm.

5. The robot (1) according to any of the preceding claims wherein the robot (1) further comprises at least one guide (70), preferably two guides (70), wherein the gripper unit (5) is attached to the at least one guide (70), and wherein the gripper unit (5) is configured to move along a guide axis between the ends of the guide (70).

6. The robot (1) according to any of the preceding claims, wherein the gripper (50) is configured to reach locations at heights below the frame (10).

7. The robot (1) according to any of the preceding claims, further comprising a temporary storage unit for temporary storing at least one item wherein the gripper (50) is configured to grip items located in the vicinity of the robot and to place said items in the temporary storage unit.

8. The robot (1) according to the preceding claim and with the features of claim 3 wherein the housing chamber (64) is configured to rotate at least by an angle sufficient to allow the gripper (50) to place items in the temporary storage unit.

9. The robot (1) according to any of the preceding claims further comprising a vision system comprising at least one sensor (66).

10. The robot (1) according to the preceding claim wherein the sensor comprises at least one of a
2D laser scanner;
at least one camera, preferably a 3D camera;
at least one ultrasonic sensor; and
at least one Lidar sensor, preferably at least one time of flight sensor.

11. The robot (1) according to any of the preceding claims wherein the robot (1) comprises a width of 50 to 150 cm; wherein the frame (10) comprises a length of 50 to 150 cm; wherein the robot (1) including the frame (10) and the gripper unit (5) comprises a length of 100 to 200 cm; and wherein the frame (10) comprises a height of 100 cm to 250 cm.

12. A method for gripping and moving items, said method comprising
providing a robot (1) according to any of the preceding claims;
the robot (1) approaching a first location comprising an item (100);
the robot (1) gripping the item (100) using the gripping unit (5);
the robot moving the item (100).

13. The method according to the preceding claim and wherein the robot (1) comprises the features of claims 3 and 7 further comprising the steps of
the gripper (50) extending from the housing chamber (64);
the gripper (50) moving the item (100) into the housing chamber (64);
the housing chamber (64) rotating by a certain angle on an axis perpendicular to the housing top plate (62);
the gripper (50) extending from the housing chamber (64) and placing the item (100) in the temporary storage unit; and
the gripper returning to the housing chamber (64).

14. The method according to any of the two preceding claims, wherein in the step of the robot (1) gripping the item (100), the robot (1) grips the item (100) from a location distanced from the ground by no more than 5 cm.

## Patentansprüche

1. Roboter (1), der zum Greifen und Transportieren von Gegenständen konfiguriert ist; wobei der Roboter (1) dazu konfiguriert ist, eine Einsatzkonfiguration anzunehmen; wobei der Roboter (1) Folgendes umfasst:
einen Rahmen (10), der in der Einsatzkonfiguration eine vertikale Rahmenprojektion aufweist; und
eine Greifeinheit (5), die zum Greifen eines Gegenstands konfiguriert ist, wobei die Greifeinheit (5) in der Einsatzkonfiguration eine vertikale Greifeinheitsprojektion aufweist;
wobei die Greifeinheit (5) in der Einsatzkonfiguration dazu konfiguriert ist, einen eingefahrenen Zustand und einen ausgefahrenen Zustand anzunehmen, wobei die vertikale Greifeinheitsprojektion im ausgefahrenen Zustand größer ist als im eingefahrenen Zustand;
wobei in der Einsatzkonfiguration und wenn sich die Greifeinheit (5) in der eingefahrenen Konfiguration befindet, die vertikale Greifeinheitsprojektion einen Abschnitt umfasst, der mit der vertikalen Rahmenprojektion nicht überlappt;
wobei die Greifeinheit (5) dazu konfiguriert ist, in der Einsatzkonfiguration verschiedene vertikale Positionen in Bezug auf den Rahmen (10) anzunehmen;
wobei die Greifeinheit (5) mit einem horizontalen Versatz zum Rahmen (10) angeordnet ist;
wobei die Greifeinheit (5) einen Greifer (50) umfasst, der dazu konfiguriert ist, einen Gegenstand zu greifen, und wobei der Greifer (50) dazu konfiguriert ist, von dem Rest der Greifeinheit (5) einzufahren und auszufahren;
wobei die Greifeinheit (5) ferner ein Greifergehäuse (60) umfasst, das zum Aufnehmen des Greifers (50) konfiguriert ist, wobei das Greifergehäuse (60) umfasst:
eine Gehäuseoberplatte (62); und
eine Gehäusekammer (64);
wobei die Gehäuseoberplatte (62) in der Einsatzkonfiguration oberhalb der Gehäusekammer (64) angeordnet ist; und
wobei der Roboter ein sich frei bewegender Roboter ist.

2. Roboter (1) nach Anspruch 1, wobei der Roboter (1) ferner eine Antriebseinheit (30) umfasst, die Folgendes umfasst:
mindestens ein Rad (32), das unterhalb des Rahmens (10) vorsteht; und
mindestens einen Motor (34).

3. Roboter (1) nach Anspruch 1, wobei die Gehäusekammer (64) dazu konfiguriert ist, sich um eine Achse, die im Wesentlichen senkrecht zur Gehäuseoberplatte (62) steht, in Bezug auf die Gehäuseoberplatte (62) zu drehen.

4. Roboter (1) nach dem vorhergehenden Anspruch, wobei die Gehäusekammer (64) eine Gehäusekammeröffnung (642) umfasst, und wobei der Greifer (50) dazu konfiguriert ist, aus der Gehäusekammer (64) durch die Gehäusekammeröffnung (642) bis zu einer Entfernung von mindestens 5 cm auszufahren.

5. Roboter (1) nach einem der vorhergehenden Ansprüche, wobei der Roboter (1) ferner mindestens eine Führung (70), vorzugsweise zwei Führungen (70), umfasst, wobei die Greifereinheit (5) an der mindestens einen Führung (70) angebracht ist und wobei die Greifereinheit (5) dazu konfiguriert ist, sich entlang einer Führungsachse zwischen den Enden der Führung (70) zu bewegen.

6. Roboter (1) nach einem der vorhergehenden Ansprüche, wobei der Greifer (50) dazu konfiguriert ist, Positionen in Höhen unterhalb des Rahmens (10) zu erreichen.

7. Roboter (1) nach einem der vorhergehenden Ansprüche, der ferner eine temporäre Lagereinheit zum temporären Lagern mindestens eines Gegenstands umfasst, wobei der Greifer (50) dazu konfiguriert ist, Gegenstände zu greifen, die sich in der Nähe des Roboters befinden, und die Gegenstände in der temporären Lagereinheit abzulegen.

8. Roboter (1) nach dem vorhergehenden Anspruch und mit den Merkmalen des Anspruchs 3, wobei die Gehäusekammer (64) dazu konfiguriert ist, sich zumindest um einen Winkel zu drehen, der ausreicht, um dem Greifer (50) das Ablegen von Gegenständen in der temporären Lagereinheit zu ermöglichen.

9. Roboter (1) nach einem der vorhergehenden Ansprüche, der ferner ein Sichtsystem mit mindestens einem Sensor (66) umfasst.

10. Roboter (1) nach dem vorhergehenden Anspruch, wobei der Sensor mindestens eines der folgenden Elemente umfasst:
einen 2D-Laser-Scanner;
mindestens eine Kamera, vorzugsweise eine 3D-Kamera;
mindestens einen Ultraschallsensor; und
mindestens einen Lidar-Sensor, vorzugsweise mindestens einen Time-of-Flight-Sensor.

11. Roboter (1) nach einem der vorhergehenden Ansprüche, wobei der Roboter (1) eine Breite von 50 bis 150 cm umfasst; wobei der Rahmen (10) eine Länge von 50 bis 150 cm umfasst; wobei der Roboter (1) einschließlich des Rahmens (10) und der Greifereinheit (5) eine Länge von 100 bis 200 cm umfasst; und wobei der Rahmen (10) eine Höhe von 100 cm bis 250 cm umfasst.

12. Verfahren zum Greifen und Bewegen von Gegenständen, wobei das Verfahren umfasst:
Bereitstellen eines Roboters (1) nach einem der vorhergehenden Ansprüche;
Annähern des Roboters (1) an eine erste Position, die einen Gegenstand (100) umfasst;
Greifen des Gegenstands (100) durch den Roboter (1) mit Hilfe der Greifeinheit (5);
Bewegen des Gegenstands (100) durch den Roboter.

13. Verfahren nach dem vorhergehenden Anspruch und wobei der Roboter (1) die Merkmale der Ansprüche 3 und 7 umfasst, weiterhin die folgenden Schritte umfassend:
Ausfahren des Greifers (50) aus der Gehäusekammer (64);
Bewegen des Gegenstands (100) durch den Greifer (50) in die Gehäusekammer (64);
Drehen der Gehäusekammer (64) um einen bestimmten Winkel um eine Achse, die senkrecht zur Gehäuseoberplatte (62) steht;
Ausfahren des Greifers (50) aus der Gehäusekammer (64) und Ablegen des Gegenstands (100) in der temporären Lagereinheit; und
Zurückkehren des Greifers zur Gehäusekammer (64).

14. Verfahren nach einem der beiden vorhergehenden Ansprüche, wobei in dem Schritt des Greifens des Gegenstandes (100) durch den Roboter (1) der Roboter (1) den Gegenstand (100) an einer Position greift, die nicht mehr als 5 cm vom Boden entfernt ist.

## Revendications

1. Robot (1) configuré pour saisir et transporter des articles ; dans lequel le robot (1) est configuré pour adopter une configuration d'utilisation ; dans lequel le robot (1) comprend :
un cadre (10) ayant une saillie verticale de cadre dans la configuration d'utilisation ; et
une unité de préhension (5) configurée pour saisir un article, dans lequel l'unité de préhension (5) a une saillie verticale d'unité de préhension dans la configuration d'utilisation ;
dans lequel, dans la configuration d'utilisation, l'unité de préhension (5) est configurée pour adopter un état rétracté et un état étendu, dans lequel la saillie verticale d'unité de préhension est plus grande dans l'état étendu que dans l'état rétracté ;
dans lequel, dans la configuration d'utilisation et lorsque l'unité de préhension (5) est dans la configuration rétractée, la saillie verticale d'unité de préhension rend une partie qui ne chevauche pas la saillie verticale de cadre ;
dans lequel l'unité de préhension (5) est configurée pour adopter des positions verticales différentes par rapport au cadre (10) dans la configuration d'utilisation ;
dans lequel l'unité de préhension (5) est située à un décalage horizontal par rapport au cadre (10) ;
dans lequel l'unité de préhension (5) comprend un préhenseur (50) configuré pour saisir un article et dans lequel le préhenseur (50) est configuré pour se rétracter et s'étendre par rapport au reste de l'unité de préhension (5) ;
dans lequel l'unité de préhension (5) comprend en outre un logement de préhenseur (60) configuré pour loger le préhenseur (50), dans lequel le logement de préhenseur (60) comprend :
une plaque supérieure de logement (62) ; et
une chambre de logement (64) ;
dans lequel la plaque supérieure de logement (62) est située au-dessus de la chambre de logement (64) dans la configuration d'utilisation ; et
dans lequel le robot est un robot se déplaçant librement.

2. Robot (1) selon la revendication 1, dans lequel le robot (1) comprend en outre une unité d'entraînement (30) comprenant :
au moins une roue (32) faisant saillie au-dessous du cadre (10) ; et
au moins un moteur (34).

3. Robot (1) selon la revendication 1, dans lequel la chambre de logement (64) est configurée pour tourner autour d'un axe sensiblement perpendiculaire à la plaque supérieure de logement (62) par rapport à la plaque supérieure de logement (62).

4. Robot (1) selon la revendication précédente, dans lequel la chambre de logement (64) comprend une ouverture de chambre de logement (642), et dans lequel le préhenseur (50) est configuré pour s'étendre depuis la chambre de logement (64) à travers l'ouverture de chambre de logement (642) d'une étendue d'au moins 5 cm.

5. Robot (1) selon l'une quelconque des revendications précédentes, dans lequel le robot (1) comprend en outre au moins un guide (70), de préférence deux guides (70), dans lequel l'unité de préhension (5) est fixée à au moins un guide (70), et dans lequel l'unité de préhension (5) est configurée pour se déplacer le long d'un axe de guide entre les extrémités du guide (70) .

6. Robot (1) selon l'une quelconque des revendications précédentes, dans lequel le préhenseur (50) est configuré pour atteindre des emplacements à des hauteurs au-dessous du cadre (10).

7. Robot (1) selon l'une quelconque des revendications précédentes, comprenant en outre une unité de rangement provisoire pour ranger provisoirement au moins un article, dans lequel le préhenseur (50) est configuré pour saisir des articles situés à proximité du robot et pour placer lesdits articles dans l'unité de rangement provisoire.

8. Robot (1) selon la revendication précédente et les caractéristiques de la revendication 3, dans lequel la chambre de logement (64) est configurée pour tourner au moins d'un angle suffisant pour permettre au préhenseur (50) de placer des articles dans l'unité de rangement provisoire.

9. Robot (1) selon l'une quelconque des revendications précédentes, comprenant en outre un système de vision comprenant au moins un capteur (66).

10. Robot (1) selon la revendication précédente, dans lequel le capteur comprend au moins l'un parmi :
un scanner laser 2D ;
au moins une caméra, de préférence une caméra 3D ;
au moins un capteur ultrasonique ; et
au moins un capteur Lidar, de préférence au moins un capteur de temps de vol.

11. Robot (1) selon l'une quelconque des revendications précédentes, dans lequel le robot (1) a une largeur de 50 à 150 cm ; dans lequel le cadre (10) a une longueur de 50 à 150 cm ; dans lequel le robot (1) comportant le cadre (10) et l'unité de préhension (5) a une longueur de 100 à 200 cm ; et dans lequel le cadre (10) a une hauteur de 100 à 250 cm.

12. Procédé de préhension et de déplacement d'articles, ledit procédé comprenant :
la fourniture d'un robot (1) selon l'une quelconque des revendications précédentes ;
l'approche, par le robot (1), d'un premier emplacement comprenant un article (100) ;
la préhension, par le robot (1), de l'article (100) en utilisant l'unité de préhension (5) ;
le déplacement, par le robot, de l'article (100).

13. Procédé selon la revendication précédente, dans lequel le robot (1) comprend les caractéristiques des revendications 3 et 7, comprenant en outre les étapes suivantes :
l'extension du préhenseur (50) par rapport à la chambre de logement (64) ;
le déplacement, par le préhenseur (50), de l'article (100) dans la chambre de logement (64) ;
la rotation de la chambre de logement (64) d'un certain angle autour d'un axe perpendiculaire à la plaque supérieure de logement (62) ;
l'extension du préhenseur (50) par rapport à la chambre de logement (64) et le placement, par le préhenseur (50), de l'article (100) dans l'unité de rangement provisoire ; et
le retour du préhenseur jusqu'à la chambre de logement (64).

14. Procédé selon l'une quelconque des deux revendications précédentes, dans lequel, à l'étape de la préhension de l'article (100) par le robot (1), le robot (1) prend l'article (100) à un emplacement situé à une distance du sol d'au plus 5 cm.
